# EUROPÄISCHE PATENTSCHRIFT

(11) **EP 0 481 577 B1**
(45) Veröffentlichungstag und Bekanntmachung des Hinweises auf die Patenterteilung: **05.08.1998**
(21) Anmeldenummer: 91250281.2
(22) Anmeldetag: 11.10.1991
(51) Int. Cl.: G01N 1/20

(54) **Vorrichtung zur kontinuierlichen Entnahme von Proben aus einem partikelbelasteten Strömungsmedium**
Device for continuously taking samples from a streaming medium with particles
Dispositif pour le prélèvement continu des échantillons d'un milieu en écoulement chargé en particules

(30) Priorität: 11.10.1990 DE 4032520
(43) Veröffentlichungstag der Anmeldung: 22.04.1992
(73) Patentinhaber: LAR Analytik und Umweltmesstechnik GmbH, 10179 Berlin (DE)
(72) Erfinder: Pilz, Ulrich, Dr. Ing., W-1000 Berlin 21 (DE)
(74) Vertreter: Christiansen, Henning, Dipl.-Ing.

(56) Entgegenhaltungen:
- AU-B- 577 524
- DE-A- 3 724 286
- GB-A- 917 080
- GB-A- 2 154 547
- US-A- 3 921 458
- US-A- 4 481 833
- US-A- 4 941 360
- McGrawHill: Enc.of Science and Technology, Stichwort "Sewage collection systems", 1992

## Beschreibung

Die Erfindung betrifft eine Entnahmevorrichtung für Proben aus einem partikelbelasteten Strömungsmedium, insbesondere Abwasser.

Kontinuierlich arbeitende Meßgeräte für die Sicherung des Gewässerschutzes oder die Steuerung der Arbeitsprozesse in Kläranlagen erfordern einen ständig fließenden Strom des zu untersuchenden Testwassers bzw. einer Testlösung in das entsprechende Gerät.

Dabei besteht jedoch grundsätzlich immer die Gefahr, daß die in dem zu untersuchenden Abwsser vorhandenen Feststoffe oder kolloiden Bestandteile innerhalb der Meßgeräte Störungen durch verstopfungen verursachen. Diese Verstopfungen erschweren einen Dauerbetrieb der meßtechnischen Anlagen und können ihn im Extremfall sogar unmöglich machen.

Um diese Probleme zu vermeiden, werden nach dem bekannten Stand der Technik den kontinuierlich arbeitenden Meßgeräten zur Überwachung der Wasserqualität spezielle Vorrichtungen zur vorreinigung der zu testenden Wasserproben vorgeschaltet.

Die einfachste Form der Vorreinigung des Testwassers für kontinuierlich arbeitende Meßvorrichtungen erfolgt bekannterweise durch Flächen- oder Membranfilter, die das Testwasser durchströmen muß, bevor es in das Meßgerät eintreten kann. Um einen sicheren Betrieb der Meßanlage zu gewährleisten, werden die entsprechenden Filter in bestimmten Zeitintervallen ausgewechselt.

Aufgrund des im allgemeinen sehr hohen Anteils an Partikeln in den zu untersuchenden Wässern ergibt sich bei diesem an sich einfachen Vorreinigungsprinzip ein erheblicher und normalerweise nicht vertretbarer Wartungsaufwand.

Aus diesem Grunde wird die für den sicheren Betrieb der Meßgeräte notwendige Filterung der zu testenden Wasserproben bei handelsüblichen Vorrichtungen in mehreren varianten durchgeführt:
- Durchfluß des Probenwassers mit hoher Geschwindigkeit durch ein aus aus Filtermaterial. Das durch die poröse Wandung austretende Wasser (Filtrat) wird aufgefangen und dem Analysegerät zugeleitet, während Partikel oder Beläge an der Rohrinnenseite von dem Hauptwasserstrom abtransportiert werden.
- verwendung von eines reißfesten Papierfilterbandes, das von einem Aufwickelmechanismus vor einem Saugkopf entlang gezogen wird. Der Saugkopf taucht in das zu ihm geförderte Wasser ein. Durch die ständige Erneuerung der Filteroberfläche wird ein verstopfen vermieden.
- Periodisches Reinigen einer Filteroberfläche durch Ultraschall.

Zwar sind die gebräuchlichen Filtersysteme häufig automatisiert. Sie führen in der praktischen Anwendung aber dennoch häufig zu Störungen, sind aufwendig und niemals wartungsfrei. Nachteilig ist darüberhinaus, daß sich gelöste Inhaltsstoffe des Strömungsmittels am Material des Filters oder an dem aufsitzenden Filterkuchen durch Adsorbtion festsetzen können. Dadurch wird die chemische Zusammensetzung des für die Analyse entnommenen Filtrats verändert.

Darüberhinaus sind aus der Patentliteratur eine vielzahl konstruktiver Lösungen für die Entnahme von Proben aus flüssigen, mit Feststoffen versetzten Stoffströmen bekannt.

So ist in der DE-OS 3 724 286 eine Probenentnahmevorrichtung beschrieben, mit der repräsentative Proben aus einer Flüssigkeit entnommen werden können, in der fasrige oder fadenförmige Partikel suspendiert sind. Derartige Proben werden unter anderem bei der Herstellung von Papier untersucht.

Um der hinlänglich bekannten Gefahr einer verstopfung der Öffnungen, durch die die Suspensionsproben gezogen werden sollen, vorzubeugen, wird vorgeschlagen, in einer Rohrleitung, in der die zu untersuchende Suspension transportiert wird, querab eine Düse und einen Einlaßtrichter zu installieren.

Die Düse ist dabei an eine Druckflüssigkeitsversorgung angeschlossen. Der Einlaßtrichter ist mit einem Probenzuführrohr verbunden. Die Ausströmöffnung der Düse ist auf den Einlaßtrichter gerichtet.

Bei Betrieb der Einrichtung wird ein Druckflüssigkeitsstrahl auf den Einlaßtrichter gerichtet aus der Düse ausgestoßen. Auf diese Weise werden Partikel aus der Suspension in den Flüssigkeitsstrahl hineingerissen und mit dem Strahl in den Einlaßtrichter und danach in das Probenzuführrohr befördert.

Durch die entsprechenden Druck- bzw. Strömungsverhältnisse soll erreicht werden, daß keine Brückenbildung oder Verstopfung auftritt.

Der Nachteil der vorbeschriebenen Lösung besteht vor allem in dem erheblichen gerätetechnischen Aufwand und der zwingenden voraussetzung des Hilfsenergieeinsatzes, um repräsentative Proben entnehmen zu können. Darüberhinaus ist die Einstellung eines optimalen Arbeitspunktes (Ausströmgeschwindigkeit an der Düse) mit Schwierigkeiten verbunden.

Weiterhin ist in der DD-A-12 863 eine Vorrichtung beschrieben, mit der von in einer Schwelerei entstehenden flüssigen Zwischenprodukten eine Probe gezogen werden kann und bei der eine verstopfung der Abführungsleitungen durch von in de flüssigen Zwischenprodukten enthaltenen Feststoffen vermieden werden soll.

Dabei wird die Probe der mit Feststoffen belasteten Flüssigkeit über eine Hohlwelle entnommen, wobei die Flüssigkeit über sogenannte Schöpfelemente mittels Drehbewegung in die Hohlwelle gefördert werden. Innerhalb der Hohlwelle befindet sich eine Nadel, die sich dreht und gleichzeitig auf- und abwärts bewegt und dadurch ein verstopfen der Hohlwelle verhindern soll.

Der wesentliche Nachteil dieser Lösung liegt in dem nicht vertretbar hohen mechanischen Aufwand. Gleichzeitig ist nicht in ausreichendem Maße gesichert, daß nicht durch kleinere Partikel, die durch die Nadelbewegung entstehen, keine verstopfung der Hohlwelle eintreten könnte.

Des weiteren wird in der US-A-4 481 833 eine Sonde zur Entnahme von Proben aus partikelbelasteten strömenden Medien vorgeschlagen. Gemäß dieser Lösung wird die Sonde querab zur Strömungsrichtung in dem das Stömungsmittel führenden Leitungsrohr installiert.

Die Entnahmesonde besitzt in ihrem Strömungsschatten eine Einströmöffnung. Im Bereich der Einströmöffnung sind grundsätzlich V-förmig gestaltete Strömungsleitelemente angeordnet.

Nachteilig bei der vorab beschriebenen Konstruktion ist, daß aufgrund der räumlichen Ausdehnung der Entnahmesonde, insbesondere im Bereich der Einströmöffnung, mit Sicherheit größere Verwirbelungseffekte auftreten. Damit vergrößert sich die Gefahr, daß eine bestimmte Menge von Partikeln mit der Probenflüssigkeit in die sensiblen Meßgeräte gelangen kann und so durch verstopfungen sichere und korrekte Meßergebnisse bei Dauermessungen verhindert werden.

Darüberhinaus ist die vorgeschlagene Sonde konstruktiv aufwendig und kann bei eingetretenen Verstopfungen nur mit größerem Aufwand gereinigt werden.

Weiterhin ist in der GB-A-21 54 547 eine flexible Sonde zur Verwendung in einem offenen Kanal erwähnt, welche sich mittleren Strömungsgeschwindigkeit in dem Kanal durch ihre Neigung anpaßt und je nach Strömungsgeschwindigkeit Proben aus unterschiedlichen Tiefen des Flüssigkeitsquerschnitts in dem Kanal entnimmt. Hierbei besteht kein Zusammenhang mit einer möglichen Partikelbelastung. Auch entnimmt dieses Probennahmesystem die Wasserprobe nicht entgegen der Richtung des Hauptstroms. Außerdem verringert sich gerade bei niedrigen Strömungsgeschwindigkeiten der Winkel zum Hauptstrom, so daß gerade bei insgesamt geringen Strömungsgeschwindigkeiten keine ausreichende Trennung bewirkt werden kann.

Aus GB-A-917080 ist eine Vorrichtung zur Entnahme von Flüssigkeitsproben aus einem Gerinne bekannt, bei der ein in einem Mannloch gehalterter Schlauch frei in die Flüssigkeit hängt.

Aus US-A-3 921 458 ist ein isokinetisches Probennahmesystem bekannt, das ein mit seiner Ansaugöffnung im Rohrzentrum eines von einem Strömungsmedium durchflossenen Rohres angeordnetes Probennahmeröhrchen umfaßt. Die Ansaugöffnung ist stromaufwärts gerichtet.

Der im gültigen Anspruch 1 angegebenen Erfindung liegt die Aufgabe zugrunde, eine Vorrichtung nebst entsprechendem verfahren zur Entnahme eines kontinuierlichen Probestroms aus partikelbelasteten Wässern oder wässrigen Lösungen, insbesondere Abwässern, für Meßzwecke zu schaffen, bei der eine Verstopfungsmöglichkeit der Entnahmevorrichtung während des kontinuierlichen Meßbetriebes weitgehend verhindert ist.

Bei einer weiteren in der AT-A-118 200 beschriebenen Lösung wird nicht das Ziel verfolgt, eine patikelabscheidende Wirkung zu erreichen. Ziel ist vielmehr, eine Probenahme in großem Abstand von der Wand des Hauptrohrs zu bewerkstelligen, damit keine dort möglicherweise gebildeten mikrobiellen Beläge in die Probe gelangen. Durch den Einbau von Druckminderungskammern wird die Ausfließgeschwindigkeit der Probe verringert. Dies setzt aber zur Partikelabscheidung eine hohe Relativgeschwindigkeit zwischen dem Hauptstrom und dem Probenstrom voraus, wodurch aber wiederum die Möglichkeit dazu verschlechtert ist.

Da mit dieser Vorrichtung auch nicht eine Probennahme entgegengesetzt zum Hauptstrom angestrebt ist und zudem eine massive Turbulenz und Störung der Hauptströmung im Strömungsschatten des Probennehmerohrs eintreten muß, sind nicht die Voraussetzungen zu einer geeigneten und reproduzierbaren Probenentnahme gegeben.

Auch bei der in der US-A-4 941 360 beschriebenen Vorrichtung wird auf das sich einstellende Strömungsprofil im Entnahmerohr keinerlei Rücksicht genommen, so daß auch hier keine Probenentnahme in einem mit Partikeln belasteten Strömungsmedium unter Fernhaltung derselben aus dem Ansaugröhrchen erfolgen kann.

Die Erfindung beruht auf der Erkenntnis, daß konstruktiv vorsorge dafür getragen werden muß, daß grundsätzlich keine, eine mögliche verstopfung verursachende Partikel direkt in die Aufnahmeöffnung der Entnahmevorrichtung gelangen bzw. sich in ihrer Nähe anlagern können. Dabei wird durch die Ausrichtung der Sonde im Bereich einer laminaren, durch die Sonde selbst möglichst ungestörten Strömung mit relativ größter Strömungsgeschwindigkeit eine optimale Abtrennung von Partikeln aus einer partikelbelasteten Flüssigkeitsströmung durch die Massenträgheit der Partikel ausgenutzt, um partikelfreie Flüssigkeitsproben für Analysezwecke zu entnehmen.

Die Ausnutzung dieses physikalischen Effekts sichert partikelfreie Analyseproben ohne verwendung von Hilfsenergie und ohne Einsatz mechanisch aufwendiger Konstruktionen, da das aus dem strömenden partikelbelasteten Medium dem Analysegerät zugeführte Testwasser entgegen der Hauptströmungsrichtung der strömenden Flüssigkeit entnommen wird.

Da die röhrchenförmige Sonde derart flexibel ausgebildet oder gehaltert ist, daß sich das Sondenende in Strömungsrichtung in den Bereich größter Strömungsgeschwindigkeit ausrichten kann, so "sucht" sich die Sonde in besonders günstiger Weise selbsttätig den Bereich maximaler Strömungsgeschwindigkeit - der erfahrungsgemäß in Rohrmitte gelegen ist - und richtet sich entsprechend aus.

Die Strömungsgeschwindigkeit beträgt bevorzugt mehr als 10 m/sec und ist gegebenenfalls einstellbar, um die negative Selektion der Partikel zu optimieren.

Der bei einer speziellen Ausführung im wesentlichen gerade gerichtete Teil der Sonde in der Nähe der Einlaßöffnung sorgt nicht nur für eine Ausrichtung der Sonde, sondern bewirkt auch die Laminarisierung der Strömung, welche einen positiven Einfluß auf die Separierung des Partikelstroms hat.

Gemäß einer anderen vorteilhaften Weiterbildung besteht die Entnahmevorrichtung für einen kontinuierlichen Probestrom aus einer rohrförmigen Einheit, die in zwei Abschnitte unterteil bar ist. Beide Abschnitte sind vorzugsweise gerade gerichtet ausgebildet und unter einem Winkel miteinander verbunden.

Die Abwinklung der röhrchenförmige Sonde ergibt sich dadurch, daß der erste Abschnitt der rohrförmigen Einheit unter einem Winkel kleiner/gleich 45° durch die Wandung des die partikelbelastete Flüssigkeit führenden Rohres geführt ist und das freie Ende in der Rohrmitte entgegen der Strömungsrichtung gehalten ist.

Es hat sich insbesondere als vorteilhaft erwiesen, die wandstärke der zur Probenentnahme verwendeten röhrchenförmigen Sonde so gering wie möglich zu wählen, um den "Strömungsschatten" des Entnahmesystems möglichst klein zu halten und vor allem unnötige Verwirbelungen zu verhindern.

Diese zusätzlichen verwirbelungen können insbesondere dazu führen, daß der Partikelabscheidung ausgenutzte Effekt der Massenträgheit in seiner Wirkung abgeschwächt wird.

Durch die Wahl der Strömungsgeschwindigkeit in dem Rohr, das das partikelbelastete Strömungsmedium geführt ist, läßt sich der erforderliche Abscheidegrad am der Entnahmevorrichtung variieren.

Um eine gute Abscheidewirkung zu erreichen, ist eine hohe Strömungsgeschwindigkeit erforderlich.

Für den Fall, daß das partikelbelastete Medium im Rohr steht, geht der Abscheidegrad der Entnahmevorrichtung gegen Null. Das vorab beschriebene Prinzip ist auf kleinere oder größere Rohrquerschnitte gleichermaßen anwendbar.

Für den nicht erfindungsgemäßen Fall, daß die zur Probenentnahme benutzte röhrchenförmige Sonde aus festen bzw. steifen Material besteht und die Entnahmevorrichtung fest eingebaut ist, können sich größere Partikel durch Verklemmen zwischen Entnahmevorrichtung und Rohrwandung des das Medium führenden Rohres ansammeln und zu verstopfungen und damit zu Störungen des Analysevorganges führen.

Aus diesem Grunde ist es günstig, daß die röhrchenförmige Sonde zur Entnahme eines Probenstroms elastisch gehaltert in das das partikelbelastete Fluid führende Rohr eingeführt ist. Dadurch wird erreicht, daß das die röhrchenförmige Sonde zur Probenentnahme durch größere Partikel "weggeklappt" werden kann und danach wieder ihre ursprüngliche Stellung einnimmt.

Andererseits ist es gemäß einer anderen vorteilhaften Weiterbildung der Erfindung günstig, die mechanisch starre Bereiche aufweisende röhrchenförmige Sonde durch einen entsprechend langen ela-stischen Schlauch zu ersetzen, der ebenfalls durch Ausweichen den Weg für größere Partikel im Rohr bei Bedarf freigibt.

Besondere Vorteile weist die letztgenannte Lösung auch deswegen auf, weil sie zum einen sehr einfach zu realisieren ist und daß zum anderen der Schlauch aufgrund seiner Elastizität durch die Strömung in das Zentrum des das partikelbelastete Medium führende Rohres gezogen wird. Dort ist bekannterweise die größte Strömungsgeschwindigkeit vorhanden und damit auch der bestmögliche Abscheidegrad erzielbar.

Aufgrund der Schlauchelastizität gerät die Entnahmevorrichtung weiterhin durch Einfluß der Strömung in ein leichtes Vibrieren, wodurch einer Ablagerung von Partikeln an der Rohrwandung entgegengewirkt wird.

Die erfindungsgemäße Entnahmevorrichtung dient der kontinuierlichen Bereitstellung von partikelfreien Proben aus partikelbelasteten Flüssigkeitsströmungen, beispielsweise Abwässern. Die entnommenen Proben werden zur Durchführung von Analysen benötigt, um die Steuerung von Prozessen in Kläranlagen oder Maßnahmen beim Gewässerschutz durchführen zu können.

Ein besonderer Schritt besteht auch darin, daß der Probenstrom um 180° entgegengesetzt zur Richtung der partikelbelasteten Flüssigkeitsströmung über die Saugöffnung der Entnahmevorrichtung aus der zu analysierenden Strömungsmedium entnommen wird.

Es ist weiterhin von Bedeutung, daß der Saugöffnung tragende zweite Abschnitt der rohrförmigen Einheit der Entnahmevorrichtung im Strömungszentrum der partikelbelasteten Flüssigkeitströmung angeordnet wird, wobei sich die Saugöffnung in einem laminar umströmten Bereich im Strömungsschatten der Entnahmevorrichtung befindet.

Die erfindungsgemäße Lösung zeichnet sich vor allem dadurch aus, daß es sehr einfach und mit geringstem Aufwand an mechanischen Mitteln und ohne zusätzliche Hilfsenergie durchführbar ist.

Aufgrund der Einfachheit der benutzten Mittel sowie der Tatsache, daß der für die partikelfreie Probenentnahme ausgenutzte Effekt der Massenträgheit grundsätzlich unabhängig von den Umgebungsbedingungen zuverlässig nutzbar ist, kann das verfahren kontinuierlich ohne besondere Wartungs- oder Reinigungszyklen für Entnahmevorrichtung und meßtechnische Geräte zu Analysezwecken eingesetzt werden.

Die röhrchenförmige Sonde ist unter Wahrung der für das Verfahren notwendigen Formbeständigkeit in ihren Abmessungen, d.h. Durchmesser und Wandstärke, optimiert.

Durch geeignet gewählte elastische Materialien ist bei der erfindungsgemäßen Entnahmevorrichtung gesichert, daß sich die Entnahmestelle für die benötigten Proben stets cort befindet, wo die günstigsten Bedingungen (Strömungszentrum, hohe Strömungsgeschwindigkeit, laminare Strömung) herrschen, um für die Entnahmevorrichtung aufgrund der Wirkung des Massenträgheitseffekts eine verstopfungsgefahr ausschließen und einen Reinigungseffekt ausnutzen zu können.

Die vorteilhaften Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
Figur 1 in einem schematischen Schnitt (Seitenansicht das Grundprinzip zur Entnahme eines kontinuierlichen Probenstroms und ihre Anordnung in einem Rohr zum Transport eines partikelbelasteten Strömungsmediums,
Figur 2 einen Querschnitt durch das Rohr nach Figur 1 längs der Linie A...A sowie

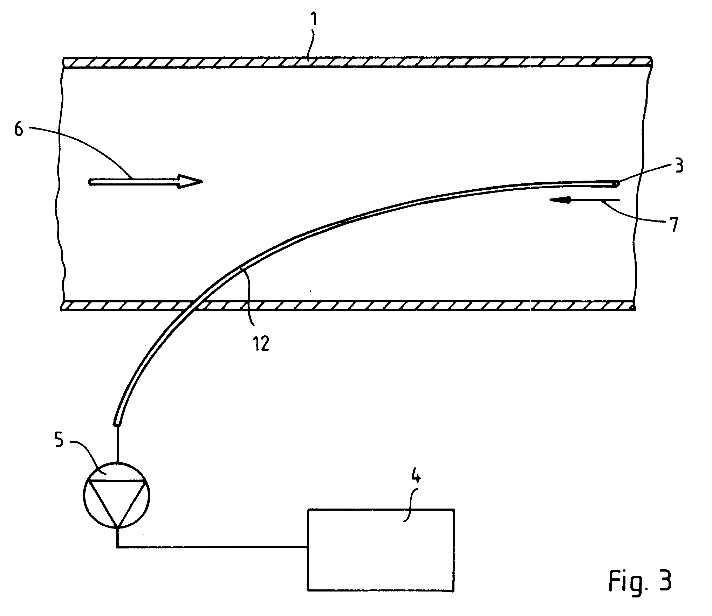

Figuren 3, 4 und 5 Ausführungsvarianten der Erfindung hinsichtlich der materialmäßigen Gestaltung der Entnahmevorrichtung und ihrer Anordnung innerhalb des das partikelbelastete Strömungsmedium aufweisenden Rohrs.

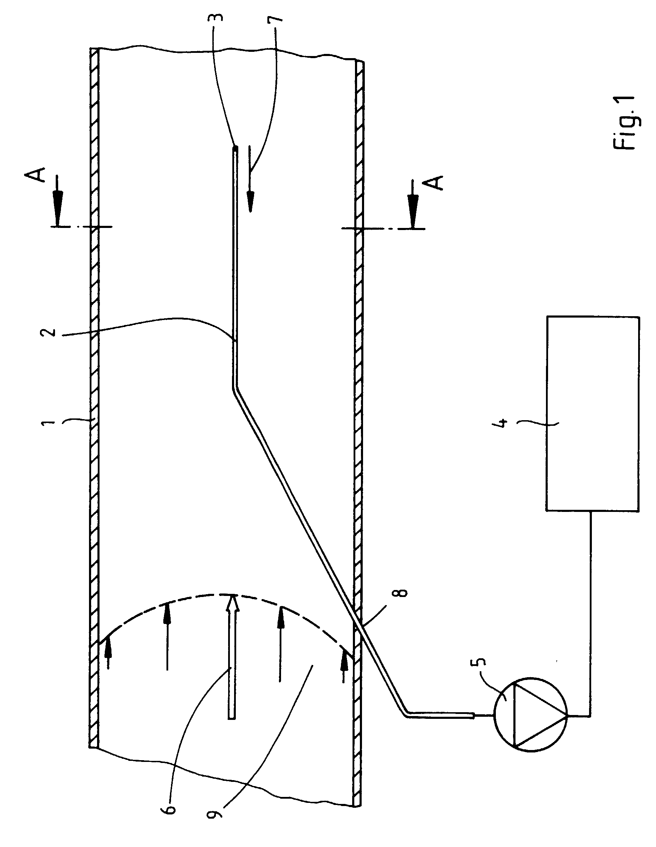

Durch die in Figur 1 dargestellte vorrichtung zur kontinierlichen Entnahme von Proben aus einem in einem Rohr 1 fließenden partikelbelasteten Strömungsmedium 9, insbesondere Abwasser, mittels einer in das Strömungsmedium hineinragenden Sonde 2, deren Ende 3 stromabwärts gerichtet ist, wird ein kontinuierliches Absaugen der zu Analysenzwecke benötigten Flüssigkeitsproben in einer Richtung von 180° - also entgegengesetzt - zur Strömungsrichtung 6 des partikelbelasteten Strömungsmediums in einem Bereich laminarer Strömung mit größter Strömungsgeschwindigkeit bewirkt. Die Verteilung der Strömungsgeschwindigkeiten ist in Figur 1 im linken Bereich durch Pfeile angedeutet.

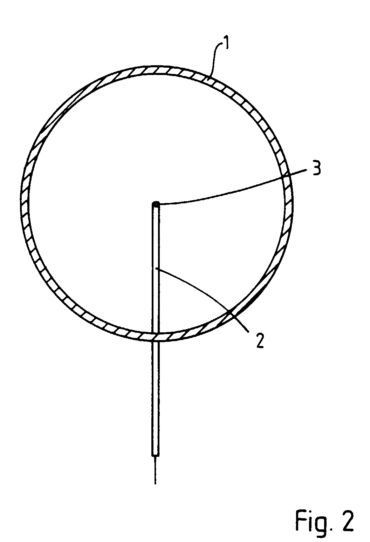

Durch die in Figur 1 dargestellte Anordnung, die auch durch die Schnittdarstellung "A" nach Figur 2 verdeutlicht wird, ist möglich, das Absaugen eines Probenstroms in einer Saugrichtung 7 entgegengesetzt zur Strömungsrichtung 6 des Hauptstroms innerhalb des Rohres 1 vorzunehmen. Die Gestaltung der Entnahmevorrichtung und die vorab beschriebene Einbaulage bewirken in vorteilhafter Weise, daß die Entnahmevorrichtung nahezu keine Verwirbelungen im Absaugebereich hervorruft. Da das Entnehmen der Flüssigkeitsproben im laminaren Bereich der Abwasserströmung innerhalb des Rohres 1 erfolgt, kann die Wirkung der Massenträgheit für den gewünschten Effekt einer Reinigung der Probenflüssigkeit und des Verhinderns möglicher Verstopfungen innerhalb der Entnahmevorrichtung und/oder der Analysegeräte in vollem Umfang ausgenutzt werden.

Das Absaugen der Probeflüssigkeit erfolgt mittels eines Saugantriebs 5, beispielsweise einer Pumpe, der an den aus dem Strömungsmittel führenden Rohr 1 herausgeführten Stutzen des ersten Abschnitts der rohrförmigen Einheit 2 angeschlossen ist.

Die abgesaugte partikelfreie Probeflüssigkeit wird danach einem Analysegerät 4 zugeführt.

Nach einer Ausgestaltung der Erfindung ist es von vorteil, die abgewinkelte rohrförmige Einheit 2 insgesamt durch eine elastische Schlaucheinheit 12 zu ersetzen.

Diese Schlaucheinheit wird ebenfalls unter einem Winkel kleiner/gleich 45° durch die Wandung des Rohres 1 in das Rohrinnere eingeführt.

Bedingt durch ihre Elastizität kann die Schlaucheinheit 12 durch die Strömung im Rohr 1 auf einfache Weise in den Bereich der laminaren Strömung im Rohrzentrum gezogen werden. Dort ist auch die höchste Strömungsgeschwindigkeit vorhanden, die den besten Abscheidegrad der Partikel von dem Strömungsmedium in der Absaugphase garantiert.

Überraschenderweise konnte festgestellt werden, daß die Schlaucheinheit 12 aufgrund ihrer Elastizität durch die Strömung im Rohr 1 in leichte Vibration versetzt wird. Die Vibration ist an dem mit der Saugöffnung freien Ende am stärksten und verhindert so auf einfachste Art und Weise, daß sich Partikel aus dem Strömungsmedium an die Schlaucheinheit 12 anlagern können.

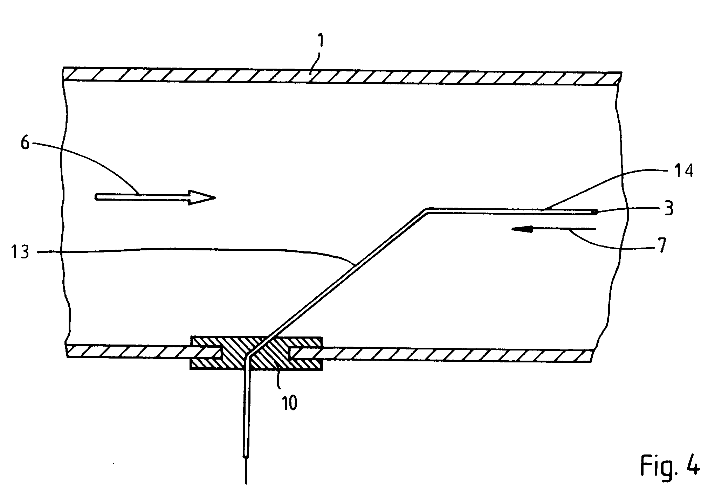

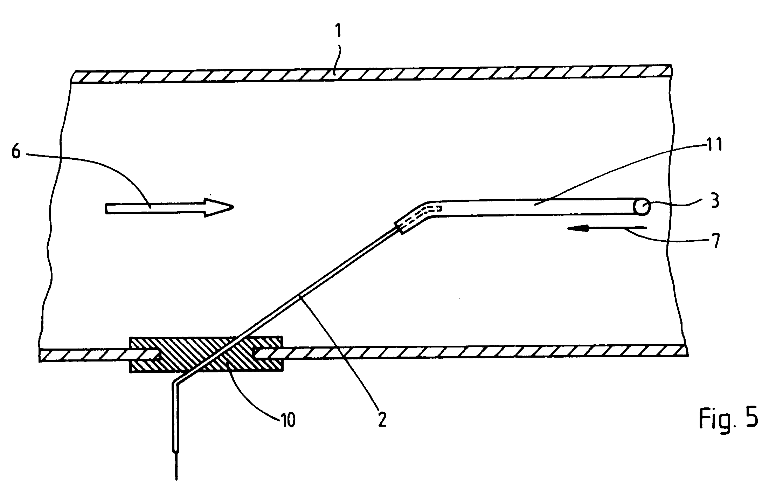

Weitere vorteilhafte Varianten der erfindungsgemäßen Lösung sind in den Figuren 4 und 5 dargestellt.

Bei der in Figur 4 dargestellten Ausführungsform der Erfindung ist die röhrchenförmige Sonde 2 im Bereich des Rohrdurchbruchs mittels eines im Durchbruchsbereich angeordneten elastischen Durchführungselements 10 elastisch gelagert. Hierbei weist die röhrchenförmige Sonde zwei im wesentlichen gerade, einen Winkel miteinander bildendende Abschnitte 13, 14 auf, wobei der erste Abschnitt 13 unter einem Winkel kleiner oder gleich 45° zur Wandung des das partikelbelastete Strömungsmedium führenden Rohrs in Stromrichtung weisend angeordnet ist und der zweite Abschnitt 14 parallel zur Stromrichtung gerichtet ist.

Da größere Partikel, die in dem Strömungsmedium mitgeführt werden, bei einer an der Einbindestelle 8 fest montierten rohrförmigen Einheit 2 die Entnahmestelle im ungünstigsten Fall nicht passieren können oder die rohrförmige Einheit 2 beschädigt werden kann, hat es sich bewährt, die rohrförmige Einheit 2 über die elastische Halterung 10 in das Rohr 1 einzuführen. Dadurch besteht auf einfache Weise die Möglichkeit, daß die rohrförmige Einheit 2 den Partikeln ausweichen kann oder einfach weggeklappt wird und der Entnahmeprozeß ungestört fortgesetzt werden kann.

Durch diese konstruktive Variante, dargestellt in Figur 4, wird derselbe Effekt erreicht, die hier die Ausbildung des röhrchenförmigen Sonde in Form eines elastischen Schlauchelements 12, bestehend beispielsweise aus Teflon, in vorteilhafter Weise ermöglicht, wobei das Röhrchen sich frei im Strömungsmedium ausrichten kann, so daß sein Ende zum zentralen Bereich größter Strömungsgeschwindigkeit hingezogen wird.

In Figur 5 ist ein weiteres Ausführungsbeispiel dargestellt, wonach der lediglich zweite Abschnitt der rohrförmigen Einheit 2 durch ein elastisches Schlauchstück 11 gebildet ist. Das dünnwandige Schlauchstück 11 besteht bevorzugt aus Teflon.

Die Erfindung beschränkt sich in ihrer Ausführung nicht auf das vorstehend angegebene bevorzugte Ausführungsbeispiel. Vielmehr ist eine weitere Zahl von Varianten denkbar, welche von der dargestellten Lösung auch bei anders gearteten Ausführungen Gebrauch macht.

## Patentansprüche

1. Vorrichtung zur kontinierlichen Entnahme von Proben mit einem Rohr (1) zur Aufnahme eines in diesem fließenden, dessen Querschnitt ausfüllenden, partikelbelasteten Strömungsmediums, insbesondere Abwasser, und einer in das Strömungsmedium hineinragenden Sonde (2), deren eine Saugöffnung (3) aufweisendes Ende zur Bereitstellung von partikelfreien Proben stromabwärts gerichtet und die somit zu einem Absaugen in einer Richtung von 180° - also entgegengesetzt - zur Strömungsrichtung (7) des partikelbelasteten Strömungsmediums ausgebildet ist,
wobei vorgesehen ist,
daß die Sonde (2) in einem Rohrdurchbruch durch die Wandung des Rohres geführt und der die Saugöffnung (3) tragende Abschnitt der Sonde in der Mitte des Rohrquerschnitts angeordnet ist derart, daß das Absaugen in einem Bereich Laminarer Strömung mit größter Strömungsgeschwindigkeit erfolgt, wobei mindestens der die Öffnung aufweisende Endbereich (11) der röhrchenförmigen Sonde (2) derart flexibel ausgebildet und/oder flexibel gehaltert ist, daß ihre öffnung selbsttätig im Bereich maximaler Strömungsgeschwindigkeit im Rohrzentrum gehalten wird und/oder Partikeln, die in dem Strömungsmedium mitgeführt werden, ausweichen kann.

2. Vorrichtung nach Anspruch 1, **dadurch gekennzeichnet,** daß die röhrchenförmige Sonde im Bereich der Rohrwandung (8) gehaltert ist.

3. Vorrichtung nach einem der vorangehenden Ansprüche, **dadurch gekennzeichnet,** daß die Sonde zwei im wesentlichen gerade, einen Winkel miteinander bildendende Abschnitte (13, 14) aufweist, wobei der erste Abschnitt (13) unter einem Winkel kleiner oder gleich 45° zur Wandung des das partikelbelastete Strömungsmedium führenden Rohrs in Stromrichtung weisend angeordnet ist und der zweite Abschnitt (14) parallel zur Stromrichtung gerichtet ist.

4. Vorrichtung nach Anspruch 3, **dadurch gekennzeichnet**, daß beide Abschnitte (13, 14) der Sonde (2) aus im wesentlichen starrem Material bestehen.

5. Vorrichtung nach einem der Ansprüche 1-3, **dadurch gekennzeichnet**, daß die röhrchenförmige Sonde (12) insgesamt aus einem flexiblen Schlauch, insbesondere aus Teflon, besteht.

6. Vorrichtung nach einem der vorangehenden Ansprüche, **dadurch gekennzeichnet,** daß der Wandungsdurchmesser des Röhrchens klein ist im Vergleich zu dessen Öffnungsdurchmesser und der Röhrchendurchmesser klein ist im Verhältnis zum Rohrdurchmesser.

## Claims

1. Apparatus for continuously taking samples, with a pipe (1) for receiving a particle-charged flow medium, particularly waste water, flowing therein and filling the cross section thereof, and a probe (2) projecting into the flow medium, one end of said probe (2), which comprises a suction port (3), being directed downstream in order to prepare particle-free samples and thus being designed to effect suction in a direction of 180° - i.e. in the opposite direction - to the direction of flow (7) of the particle-charged flow medium, the probe (2) being passed through an opening in the wall of the pipe and the section of the probe which contains the suction port (3) being arranged in the centre of the cross section of the pipe so that the suction takes place in a region of laminar flow at maximum flow speed, whilst at least the end portion (11) of the tubular probe (2) which contains the port is constructed or mounted to be flexible in such a way that its port is automatically kept in the region of maximum flow rate in the centre of the pipe and/or particles carried along in the flow medium are able to escape.

2. Apparatus according to claim 1, characterised in that the tubular probe is held in the region of the wall (8) of the pipe.

3. Apparatus according to one of the preceding claims, characterised in that the probe comprises two substantially straight portions (13, 14) at an angle to one another, the first portion (13) being arranged at an angle less than or equal to 45° to the wall of the pipe carrying the particle-charged flow medium, pointing in the direction of flow, and the second portion (14) lying parallel to the direction of flow.

4. Apparatus according to claim 3, characterised in that both sections of the probe (2) are made from substantially rigid material.

5. Apparatus according to one of claims 1 to 3, characterised in that the tubular probe (12) as a whole consists of a flexible hose, particularly made of Teflon.

6. Apparatus according to one of the preceding claims, characterised in that the diameter of the wall of the tube is small in relation to its diameter of opening and the diameter of the tube is small in relation to the diameter of the pipe.

## Revendications

1. Appareil pour le prélèvement en continu d'échantillons, comprenant un tube (1) pour le prélèvement d'un fluide en écoulement dans celui-ci, chargé de particules et remplissant la section du tube, en particulier des eaux usées, et comprenant une sonde (2) qui fait saillie dans le fluide en écoulement, dont une extrémité, qui présente une ouverture d'aspiration (3), est dirigée vers l'aval pour la préparation d'échantillons exempts de particules, et est par conséquent réalisée pour une aspiration dans une direction à 180° de la direction d'écoulement - donc à l'opposé - (7) du fluide en écoulement chargé de particules,
dans lequel il est prévu
que la sonde (2) est guidée dans une traversée du tube à travers la paroi du tube, et le tronçon de la sonde qui porte l'ouverture d'aspiration (3) est agencé au milieu de la section du tube, de telle façon que l'aspiration a lieu dans une région d'écoulement laminaire qui présente la plus forte vitesse d'écoulement, et que du moins la région terminale (11) de la sonde en forme de petit tube (2), laquelle présente l'ouverture, est réalisée et/ou tenue de manière flexible, de telle façon que son ouverture est automatiquement tenue dans la région de vitesse d'écoulement maximal au centre du tube et/ou est capable d'éviter des particules qui sont entraînées dans le fluide en écoulement.

2. Appareil selon la revendication 1, caractérisé en ce que la sonde en forme de petit tube est tenue dans la région de la paroi du tube (8).

3. Appareil selon l'une des revendications précédentes, caractérisé en ce que la sonde comprend deux tronçons (13, 14) sensiblement droits, formant l'un avec l'autre un angle, le premier tronçon (13) étant agencé sous un angle inférieur ou égal à 45° par rapport à la paroi du tube qui mène le fluide en écoulement chargé de particules, en étant dirigé dans la direction d'écoulement, et le second tronçon (14) étant orienté parallèlement à la direction d'écoulement.

4. Appareil selon la revendication 3, caractérisé en ce que les deux tronçons (13, 14) de la sonde (2) sont constitués en un matériau sensiblement rigide.

5. Appareil selon l'une des revendications 1 à 3, caractérisé en ce que la sonde en forme de petit tube (12) est constituée en totalité par un tuyau flexible, en particulier en Téflon (marque déposée).

6. Appareil selon l'une des revendications précédentes, caractérisé en ce que le diamètre de paroi du petit tube est petit par comparaison au diamètre de son ouverture, et le diamètre du petit tube est petit par comparaison au diamètre du tube.
